# EUROPEAN PATENT APPLICATION

(11) **EP 1 256 443 A1**
(43) Date of publication of application: **13.11.2002**
(21) Application number: 02007626.1
(22) Date of filing: 04.04.2002
(51) Int. Cl.: B32B 27/32, B32B 19/02, B32B 27/18

(54) **Mono- and co-extruded paper film for temporaneously or permanently protecting surfaces**

(30) Priority: 10.05.2001 IT MI010968
(71) Applicant: Centonze, Nicola, 20090 Segrate (Milano) (IT)
(72) Inventor: Proserpio, Alberto, Ing., 20133 Milano (IT)
(74) Representative: Cicogna, Franco

(57) **Abstract**

A film for temporaneously and/or permanently protecting surfaces in general, comprises a base layer, to be bound to a surface to be protected and one or more outer layers, co-extruded with the base layer, and made of thermoplastic and/or elastomeric materials, including addition agents, and providing a rough surface, to be exposed to the view, which can be printed and written upon and has a paper-like aesthetic aspect.

## Description

### BACKGROUND OF THE INVENTION

The present invention relates to a mono- or co-extruded film, for temporaneously or permanently protecting surfaces in general, and adapted to be coupled or laminated with other films, sheets, plates, either of a plastic material or a different material, by know laminating methods (for example by an adhesive binding method), and also adapted to package products for which no coupling steps is provided.

As is known, for temporaneously or permanently protecting surfaces in general, polyethylene or paper films are currently used which comprise an "adhesive" or binding layer: these protective films are conventionally applied to plastic surfaces (for example made of PC, PMMA, either cast or extruded, PVC, foamed PVC, PS, GPS, OPS, foamed PS, HIPS, ABS, PP, foamed PP, PET, PETG and APET, PE, PAN, PA), and to other surfaces of metal, wood, steel, stainless steel, aluminium materials, as well as plasticized or pre-painted metal sheets, glass plates and the like.

Polyethylene and paper films have both advantages and disadvantages, and each said film has technical limits.

More specifically, polyethylene films have poor surface printing or writing upon characteristics, whereas paper films have good printing upon characteristics but, a poor abrasion resistance, thereby they cannot be used for applications subjecting their surfaces to water or moisture, since the paper material layer would be easily deteriorated by absorbing moisture.

### SUMMARY OF THE INVENTION

Accordingly, the aim of the present invention is to overcome the above mentioned drawbacks, by providing a mono- or co-extruded film for temporaneously or permanently protecting surfaces in general having the advantages of both the above disclosed products but not their disadvantages, and which, moreover, can provide a undeteriorable outer layer which can be easily printed and written upon like a paper material.

With respect to laminating applications, in which are conventionally used plastic material films, such as polyolefine based plastic materials laminated, by well known laminating methods, to other plastic materials in the form of films, sheets or plates (such as PVC, foamed PVC, PS, OPS, GPS, foamed PS, PET, PETG, APET, foamed PET, PP, OPP, foamed PP, PA, PE, PAN and so on), and to non-plastic material (such as Aluminium), a further aim of the present invention is to provide an improved laminated film having very good molding properties, (to provide easily stackable molded articles such as trays, or other thermoformed elements), and improved printing or writing upon and electromagnetic radiation barrier properties, thereby providing a packaging material having a "natural" aspect, like that of paper like packaging products.

Within the scope of the above mentioned aims, a further object of the present invention is to provide such a mono- or co-extruded film which can be made by conventional extruding methods, blowing methods, either of a single bubble or double bubble type, flat head extruding methods, extruding-coating methods and so on.

Yet another object of the present invention is to provide such a mono- or co-extruded film which, owing to its specifically designed constructional features, is very reliable and safe in operation.

Yet another object of the present invention is to provide such an improved mono- or co-extruded film which can be easily obtained starting from easily available materials.

According to one aspect of the present invention, the above mentioned aim and objects, as well as yet other objects, which will become more apparent hereinafter, are achieved by a mono- or co-extruded film, characterized in that said film comprises a base layer, to be bound to a surface or support to be protected, and one or more outer layer co-extruded with said base layer, said base and outer layers being made of thermoplastic and/or elastomeric materials, with an optional inclusion of addition agents for providing a surface which can be printed and written upon.

Further important advantages of the improved film according to the present invention, are as follows:
1) An improved resistance against abrasion, better than that of prior films including paper and glue materials, with a consequent less risk to damage the plates/surfaces protected thereby, and providing an improved protection of said surfaces, during all the processing and/or handling steps thereof.
2) An improved scratch resistance, better than that of the above mentioned paper and glue material films. An example of the importance of this property should be self evident in handling plates on pallets; in fact, if the film has not a good scratch resistance frequently the top plate severely damages the underlying plate.
3) An improved tearing resistance or strength: this property would be very useful as the film is strongly peeled away; in fact, if the protective film is a paper material film, including a glue spread on a surface thereof, then it would be easily torn, with a consequent time loss and difficulties in removing the protective film.
4) An improved mutual sliding of overlapping plates, better than that of plates protected by paper and polyethylene films, with a consequent easy handling of the plates and a less labour cost in performing further optional processing operations.
   Similar observations are also valid as the film is used as a laminated material: in fact, owing to its inherent "roughness", holding trays or other thermoformed products made thereby can be easily removed from one another.
5) An improved resistance against atmospheric agents and electromagnetic radiations providing an improved barrier against water steam (moisture, rain, snow and so on), with consequent greatly reduced WVTR, (Water Vapor Transmission Rate) values.
   This property would be very important in storing finished products. (Actually, it frequently occurs that plates to be delivered to customers, before the shipment thereof, are held in an outside environment for a comparatively long time period, thereby atmospheric agents such as rain, snow or the like depositing on paper materials, would greatly deteriorate said paper materials).
   Moreover a paper film, as it is pealed away, can be torn at the paper material / glue interface, and leave a glue layer as a deposit of the plate.
   On the contrary, the film according to the invention overcomes the above mentioned problem, since it is impermeable to water steam.
   Thus, it is possible to temporaneously leave plates protected thereby in outside environments, without deteriorating risks.
   In both the above mentioned application fields, moreover, the film according to the present invention provides high protection properties against electromagnetic radiations (light, UV).
6) The film according to the present invention has moreover a stiffness smaller than that of paper based films, and, consequently, an improved laying performance without formating folds on plates.
7) The possibility of greatly reducing the film thickness thereby providing mechanical characteristics (such as abrasion resistance and scratch resistance) like those of conventional paper based films. (Actually, performed tests have shown that it is possible to reduce the film thickness by 50%, with consequent advantages from the economic and echologic disposal of standpoints).
8) An improved echologic-environmental impact, since the inventive film can be easily recycled and directly disposed of.
9) An improved aesthetic aspect, thereby providing an improved value of the product protected thereby, since the packaged product will have a "natural" aspect similar to that provided by paper, with a less "plastic feeling".
   In addition to the above features, inventive film allows the user to prepare differently colored packages, without modifying the making method thereof (for example by adding colored master batches), thereby also reducing the production waste materials.
10) An improved surface writing/printing upon property, better than that of prior plastic materials, with the possibility of applying useful wordings or printed images, which effect can also be obtained by a film, of a mono- or co-extruded type, further including an adhesive layer applied by induction or spreading methods.
11) An improved heat thereby the inventive film can also be used for protecting large thickness plates.
12) An improved folding resistance much better than that of prior polyethylene films.

More specifically, the film according to the present invention comprises a mono- or co-extruded film made by single-bubble, double-bubble blowing methods, flat head extruding methods, extruding-coating methods (by using a single extruding die).

According to the invention, the film comprises a base layer designed for contacting either the surface to the protected or materials to which the film must be permanently coupled or laminated, (by any prior laminating methods).

The base layer, which can also comprise addition agents to be also used for the outer layers, is made of thermoplastic and/or elastomeric materials.

In particular, said base layer comprises polyolefines, such as polyethylene and copolymers thereof, either grafted, polar, cyclic (such as COC) or not, terpolymers, either grafted or not, polypropylene and copolymers thereof, polybutylene, polyisobutylene, EVOH, PVOH and the like.

Said base layer could also comprise ionomers, polymers and copolymers of styrene such as SBS, SIS and the like, and hydrocarbon resins such as tackyfing resins and the like, or polyamide and PET.

Said raw materials can be used as a single component of the base layer, or in any mixtures thereof or with other materials.

The base layer can also be subjected to physical, chemical or chemical-physical processing steps, such as a corona, flame processing or depositing step for depositing thereon an adhesive material (such as an acrylic type of adhesive material) and/or surface paints and the like to provide the film with the capability of temporaneously or permanently adhering, depending on its application field, both to the surface to be protected, and to the materials to which it must be coupled, which materials can comprise plastic materials (such as cast and extruded PMMA, PC, PVC, foamed PVC, PS, GPS, OPS, foamed PS, HIPS, PP foamed PP, PET, APET, PETG, ABS, PE, PAN, PA and so on), metals, plasticized or pre-painted sheet metals, stainless steel, aluminium, wood, glass and the like.

The inventive film further comprises one or more outer layers, co-extruded with the base layer, which can be also subjected, if the film is provided for a permanent coupling, to an embossing process.

Said outer layers, in particular, can comprise thermoplastic and/or elastomeric materials like those of the base layer, depending the film application, and further include addition agents either of organic or inorganic nature, as an active principle or in the form of a masterbatch, thereby providing a surface having an aesthetic-functional aspect similar to that of a paper material, and adapted to be printed and/or written upon.

That same result can be obtained by embossing a film not including addition agents, if said film is to be used for a permanent coupling or laminating application.

Further advantageously, it is possible to also include, as addition agents, carbonates, such as calcium carbonate, in a rate up to 70% of the film active principle.

It is also possible to use titanium bioxide, in a rate up to 70%, barium sulphate or zinc sulphide and other commercially available filling materials.

To provide the required characteristic, that is to form a paper-like surface having a desired roughness, allowing said surface to be easily printed and/or written upon, it is also possible to use high molecular weight polyethylene based materials.

Said addition materials can be used either individually or in any mixture thereof or with other filling materials, to provide the desired characteristics.

The mono- or co-extruded film according to the present invention can be indifferently made by conventional making methods, to provided the outer surface which can be printed or written upon with wordings, patterns, drawings and so on, and for facilitating further assembling steps of articles of manufacture to be packaged in said film, and furthermore for improving the aesthetic aspect of the packages made thereby.

The paper-like film, having typically a brown or white color, with different color tones, can be either optically transparent or clear, or, alternatively, it can have any desired colors and color tones.

In making the inventive film, it would be also possible to use addition materials different from those which have been hereinabove mentioned, provided that said addition materials provide the inventive film with a paper-like texture, having a suitable desired roughness, to allow the film to be easily printed and/or written upon.

Moreover, between the base layer and outer layer and/or layers it would be possible to provide further intermediate layers made, depending on requirements, for example of the above mentioned thermoplastic or elastomeric materials used for making the base layer.

Only by way of a further example, if the film must be formed with oxygen, or other gas, or odor, barrier properties, then it would be possible to use raw materials such as EVOH and PA for making the intermediate or outer layer.

Also these layers can be formulated with the above mentioned addition materials.

The invention, as disclosed, is susceptible to several modifications and variations, all of which will come within the inventive idea scope.

Moreover, in practicing the invention, the used materials and elements, can be replaced by other technically equivalent materials and elements.

## Claims

1. A film for temporaneously and/or permanently protecting surfaces in general or for use in a laminating field, or for packaging products without any intermediate laminations, **characterized in that** said film comprises a base layer, designed for contacting a support or product, and one or more outer layers, said outer layer or layers being co-extruded with said base layer, said outer layer or layers being made of thermoplastic and/or elastomeric materials including additive agents providing said film with a surface having printing and/writing upon properties and an aspect similar to that of a paper material.

2. A mono- or co-extruded film, according to the preceding claim, **characterized in that** said film is made by using a single bubble or double bubble blowing extruding method.

3. A mono- or co-extruded film, according to one or more of the preceding claims, **characterized in that** said film is made by a flat head extruding method.

4. A mono- or co-extruded film, according to one or more of the preceding claims, **characterized in that** said film is made by an extruding-coating method.

5. A mono- or co-extruded film, according to one or more of the preceding claims, **characterized in that** said base layer has been subjected to physical, chemical, chemical-physical and mechanical processing treatments, for allowing said base layer to temporaneously or permanently adhere to a surface to be protected, or to allow said base layer to be laminated or spread upon.

6. A mono- or co-extruded film, according to one or more of the preceding claims, **characterized in that** said chemical-physical or chemical processing treatments comprise a corona or flame processing or a coating or induction processing for coating or induction applying on said base layer any desired type of adhesive materials.

7. A mono- or co-extruded film, to be used in a permanent coupling application, performed by any existing laminating methods, according to one or more of the preceding claims, and **characterized in that** said processing comprise an embossing processing.

8. A mono- or co-extruded film, according to one or more of the preceding claims, **characterized in that** said thermoplastic and/or elastomeric materials comprise polyolefines (polyethylene and copolymers thereof, either grafted or not, polar or not, cyclic or not, terpolymers either grafted or not, polypropylene and copolymers thereof, polybutylene, polyisobutylene, EVOH, PVOH).

9. A mono- or co-extruded film, according to one or more of the preceding claims, **characterized in that** said thermoplastic and/or elastomeric materials comprise Ionomers, styrene polymers and copolymers, hydrocarbon resins, polyamide resins, PET.

10. A mono- or co-extruded film, according to one or more of the preceding claims, **characterized in that** said additive agents for said base layer or outer layers are made by using carbonates, such as calcium carbonate and magnesium carbonate.

11. A mono- or co-extruded film, according to one or more of the preceding claims, **characterized in that** said outer layer or outer layers and/or base layer are made by using additive agents such as silicates.

12. A mono- or co-extruded film, according to one or more of the preceding claims, **characterized in that** said silicates comprise glass fibers, glass balls, talk, kaolin, mica and the like.

13. A mono- or co-extruded film, according to one or more of the preceding claims, **characterized in that** said outer layer or layers and/or said base layer comprise addition agents such as natural or synthetic silica.

14. A mono- or co-extruded film, according to one or more of the preceding claims, **characterized in that** one or more of said outer layers and/or the base layer comprise additive agents such as titanium bioxide.

15. A mono- or co-extruded film, according to one or more of the preceding claims, **characterized in that** one or more of said outer layers and/or base layer comprise additive agents such as barium sulphate.

16. A mono- or co-extruded film, according to one or more of the preceding claims, **characterized in that** one or more of said outer layers and/or base layer comprise additive agents such as zinc sulphide.

17. A mono- or co-extruded film, according to one or more of the preceding claims, **characterized in that** one or more of said outer layers and/or base layer comprise additive agents in a rate up to 75% of active principle in said film, depending on the additive agent type and the characteristics to be obtained in said film.

18. A mono- or co-extruded film, according to one or more of the preceding claims, **characterized in that** one or more of said outer layers and/or base layer are made of high molecular weight polyolefines.

19. A mono- or co-extruded film, according to one or more of the preceding claims, **characterized in that** said film comprises intermediate layers having different physical and functional characteristics.

20. A mono- or co-extruded film, according to one or more of the preceding claims, **characterized in that** said film is provided with optical properties and has a brown, white color, a clear color or any other colors and color tones.

21. A mono- or co-extruded film, according to one or more of the preceding claims, and substantially as broadly disclosed and illustrated and for the intended aim and objects.
